# EUROPEAN PATENT APPLICATION

(11) **EP 0 769 750 A1**
(43) Date of publication of application: **23.04.1997**
(21) Application number: 96304810.3
(22) Date of filing: 28.06.1996
(51) Int. Cl.: G06F 17/60, G06F 17/27

(54) **A method for electronically deriving and parsing the mathematic structure of a financial table**

(30) Priority: 30.06.1995 US 497243
(71) Applicant: PRICE WATERHOUSE WORLD FIRM TECHNOLOGY CENTRE, Menlo Park, California 94025 (US)
(72) Inventor: Ferguson, Don Carl, San Francisco, CA 94122 (US)
(74) Representative: Beresford, Keith Denis Lewis

(57) **Abstract**

A method for deriving the mathematical structure of a financial table and using the mathematical structure to categorize the components of the financial table according to the expected structure of the financial table.

## Description

### CROSS REFERENCE TO APPENDIX

Appendixes A, B and C, which are part of the present disclosure, consist of three sheets attached herein and are listings of the software aspects of the preferred embodiment of the present invention.

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### BACKGROUND OF THE INVENTION

### Field of the Invention

The present invention generally relates to methods for deriving and parsing mathematical tables, in particular, a method for deriving the mathematical relationships of the line items composing the mathematical tables in order to categorize the information.

### Description of the Prior Art

Financial statements of a number of U.S. public corporations are now available electronically from a number of sources and can be obtained via the internet. In the future, all corporations will be required under the law to file their financial statements electronically. A financial statement is required to contain certain tables of information such as balance sheets, income statements, and cash flow statements, and there may be information explaining the tables and other pertinent information regarding the company.

In the electronic format, a file containing the financial statement is typically uncoded, meaning that there are no codes in the file specifically indicating the type of information represented by each line or column of text. Although the file is typically in plain ASCII text and ASCII text is conducive for reading by a person, it is not conducive for processing by a computer. In order to have the computer extract the desired information from the file, the content of the file must be identified, meaning that the various tables in the file must be recognized and the content within each table must be parsed and be broken down to their constituent parts. Once the data is recognized and broken down, it can be normalized and manipulated. For example, the normalized data can be placed in a spreadsheet program or a database program and the performance of the company can be illustrated and analyzed by various mathematical, statistical, or financial models. The relationship between various financial statement entries can be compared and hypothetical situations can be generated and tested. Furthermore, industry analysis can be performed as well by gathering and collating data from the financial statements of several companies. Thus, there is great incentive for identifying and parsing the content of a file containing a financial statement.

There are two important considerations in the process of identifying and parsing of a file containing a financial statement. The first consideration is speed; the second consideration is accuracy.

Once the financial statement of a company is released, it will have immediate impact upon the valuation of the stock of the company. It may also, when combined with information relating to other companies, impact the valuation of the industry. Thus, it is time-critical to have the financial statement available in a form that can be manipulated for analysis. Furthermore, if a large number of financial statements must be processed, a method for processing of the statements must have reasonable computational speed. The financial statement must also be accurately recognized and processed. Inaccurate financial information can have a disastrous impact on the decision making process. It is therefore important that means be available for facilitating timely and accurate analysis of the statements.

A method currently employed by a database company for processing financial statements requires that the information be categorized and manually entered. This is a labor-intensive process that is slow and prone to human error. Hence, there is a need for a fast and accurate method for recognizing and parsing of files containing financial statements.

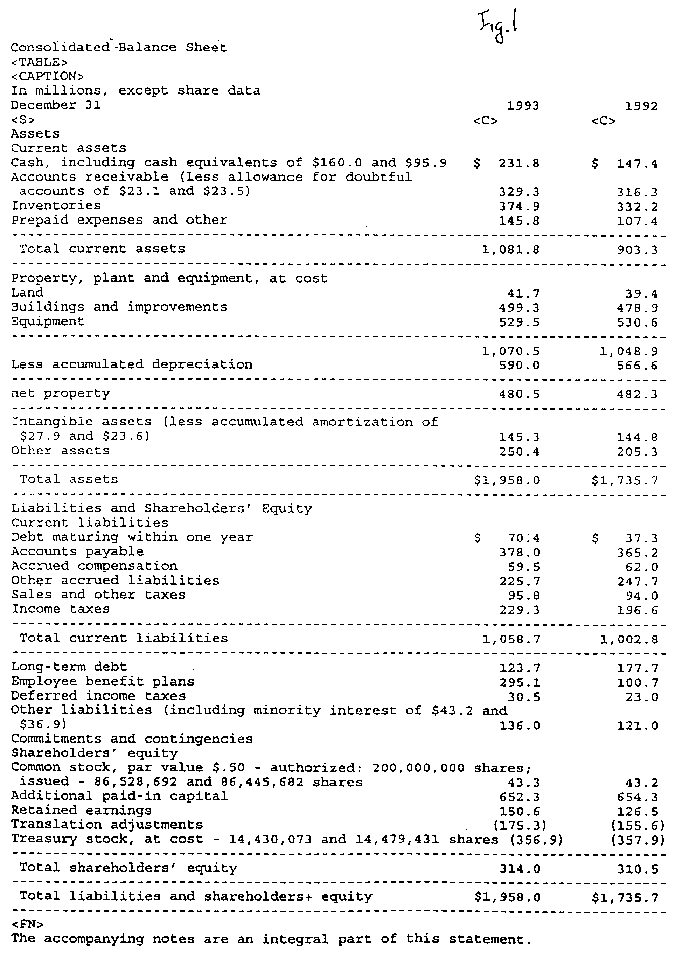

There are several problems associated with the processing of a file containing a financial statement. A file containing a financial statement would include tables such as balance sheets, income statements, and cash flow statements. These tables and their locations must be identified and the line items that compose these tables must be identified as well. Referring to Fig. 1, a portion of an ASCII file containing a balance sheet is illustrated. Within each table, there may be several years of information set out in column form with column headers. The column headers and boundaries for each column need to be identified in order to identify the content of each column for each line item. Note that although the ASCII files may contain some codes indicated in angle brackets, these codes are not always present and are not sufficient as indicators for a program to properly parse the information in the files.

A problem of particular interest here is that the components within the financial table and the relationships among the components need to be identified in order to properly verify and categorize the information presented by the components of the financial table. One approach to this problem is to parse the mathematical structure of the table. In the prior art, parsing typically starts from the top of the table and proceeds to the bottom of the table. This approach proves to be time-consuming and the results produced are unsatisfactory. If there is a mistaken assumption made at the beginning of the parsing process, the mistaken assumption may not be discovered until further down the table, wasting previous efforts. In addition, the number of permutations of parsing path possibilities for this approach is quite large.

After the components making up the table are verified by the parsing process, the components composing the table must be identified and categorized so that the computer can properly process the data.

### SUMMARY OF THE INVENTION

It is therefore an objective of the present invention to provide an automated method for identifying financial statements stored in uncoded electronic format such as an ASCII file.

It is another objective of the present invention to provide an automated method for identifying financial tables such as balance sheets, income statements, and cash flow statements of a financial statement stored in uncoded format.

It is still another objective of the present invention to provide an automated method for parsing the mathematical structure of a financial table.

It is still another objective of the present invention to provide an automated method for recognizing the components of the tables.

Briefly, a preferred embodiment of the present invention provides a method for deriving the mathematical structure of a financial table and using the mathematical structure to categorize the components of the financial table according to the expected structure of the financial table.

Although the references in this application are made to financial tables, the present invention is applicable to all mathematical tables where there are mathematical relationships between the line items composing the mathematical tables.

The present invention is implemented using the programming language PROLOG. However, it is to be understood that the present invention is not limited the programming language utilized.

An advantage of the present invention is that it provides a method for identifying the constituent parts of financial statements presented in uncoded format such as an ASCII file.

Another advantage of the present invention is that it provides a method for identifying financial tables such as balance sheets, income statements, and cash flow statements of a financial statement stored in uncoded format.

Still another advantage of the present invention is that it provides a method for deriving the mathematical structure of a table.

Still another advantage of the present invention is that it provides a method for recognizing the components of the tables.

### IN THE DRAWINGS

Fig. 1 is an example of a portion of an ASCII file containing a financial statement; specifically, a balance sheet is illustrated.

Fig. 2 is a pseudo-code listing of the general operation of the parsing process of the present invention.

Figs. 3a-3c is a flowchart illustrating the steps in parsing the line items of a financial table.

Fig. 4 shows the state of a balance sheet after the line items have been identified but before it is parsed.

Fig. 5 shows the subtotals found after a first pass by the parser of the present invention.

Fig. 6 shows the subtotals found after a second pass by the parser of the present invention.

Fig. 7 shows the subtotals found after a third pass by the parser of the present invention.

### DETAILED DESCRIPTION OF THE PREFERRED EMBODIMENTS

A preferred embodiment of the present invention provides a method for processing the line items of a financial table to ensure that the line items do in fact represent the expected financial table and to identify the components of the table.

A financial table is comprised of line items, subtotals, and grand totals. By recognizing the mathematical structure of the table, the relationship between the line items, subtotals, and grand totals can be readily understood and categorized. The components of the table can be recognized once the mathematical structure of the table is recognized since a component is typically a subtotal.

The present invention provides a bottom-up parser where the series of line items are processed from the bottom of the table to the top of the table. The last line of the table is first taken as a subtotal. In traversing up the table and maintaining a running total of the numbers from the line items preceding the subtotal line, two tests may be performed for each line item being processed. In the first test, the number from the current line item is summed with the running total. If the sum equals the subtotal, the constituent line items are marked as a block having the value of the subtotal. When computing subsequent, higher-order subtotals in subsequent passes, the blocked line items are treated as a single line item. If the sum does not equal to the subtotal, the second test is performed and determines whether or not the number in the current line subtracting the running total equals the subtotal. If the subtraction equals the subtotal, as discussed above, the constituent line items are marked as a block having the value of the subtotal, and the blocked line items are treated as a single line item for the subsequent passes.

If one or more subtotals are found, it is then necessary to make another bottom-up pass over the data to find higher-order subtotals. When there has been a pass over the data where no subtotals are found, the process stops.

However, if the parser fails to divide the table into its expected components, it may be the situation that a subtotal is not recognized because it is comprised of a sequence of additions and subtractions. The present invention provides a method that can compute "mixed" subtotals by non-deterministically negating selected line items and recomputing subtotals.

Note that the reference to a number from a line item may be a reference to a number vector as well where a given line item has more than one column. The numbers for the different columns for the same line item are processed in the same manner. The number vector allows cross-check between the columns and avoids the possibility that a sequence of line items will add up by coincidence, since the coincidence would have to co-occur in all the columns of the table.

Once the mathematical structure of the table has been determined, the components of the table can be easily recognized and categorized via a pattern matching process.

### DERIVING THE MATHEMATICAL STRUCTURE OF A TABLE

A financial table is composed of line items, subtotals of the line items, and grand totals. The technique employed by the present invention utilizes a bottom-up parser and tests each number to see if it represents a subtotal of the numbers above it. An embodiment of the present invention written in PROLOG is attached herein as Appendixes A, B and C and is expressly incorporated herein as part of this disclosure.

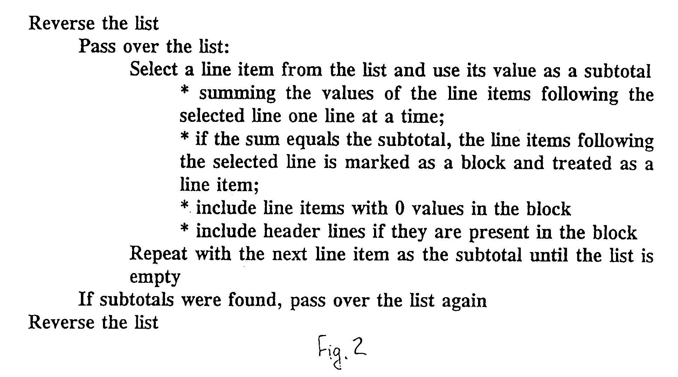

Fig. 2 illustrates the general pseudo-code for the bottom up parser. As described, the line items in the table, referred to as a list, are reversed for bottom-up processing. In a pass over the list, a line item is selected from the list and its number is assumed to be a subtotal. If the sum of the numbers of the line items following the selected line item equals the subtotal, the selected line item is determined to be a subtotal and the lines making up the subtotal are marked. This process repeats until each line item has been tested to determined if it is also a subtotal. If any subtotals were found in the process, another pass is made over the list. When no more subtotals are found, the list is reversed to return the line items to their original order.

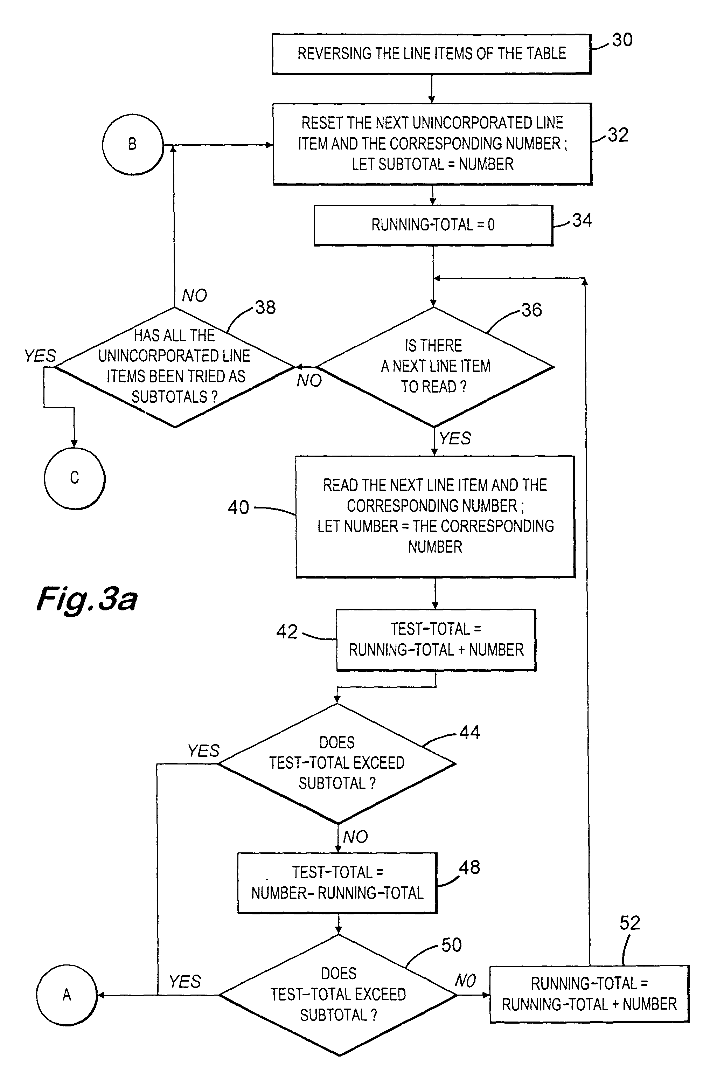

Referring to Fig. 3a, a detail flowchart illustrating the steps of the bottom-up parsing method is depicted. As indicated by block 30, the line items of a table are reversed in order to, in effect, process the data from the bottom to the top. The first line of the table is taken as a subtotal 32 and the program attempts to find line items that may sum up to this subtotal by either addition or subtraction. A variable "running_total" is first initialized to 0 34. The next step is to test whether or not there is a next line item to read. If there are no more line items to read 36, the next unincorporated line item in the table is treated as the subtotal and the process repeats until all the line items have been processed 38. If there are still line items in the table to process 36, the next line item is read and a variable, "number", is set to the number of the line item 40.

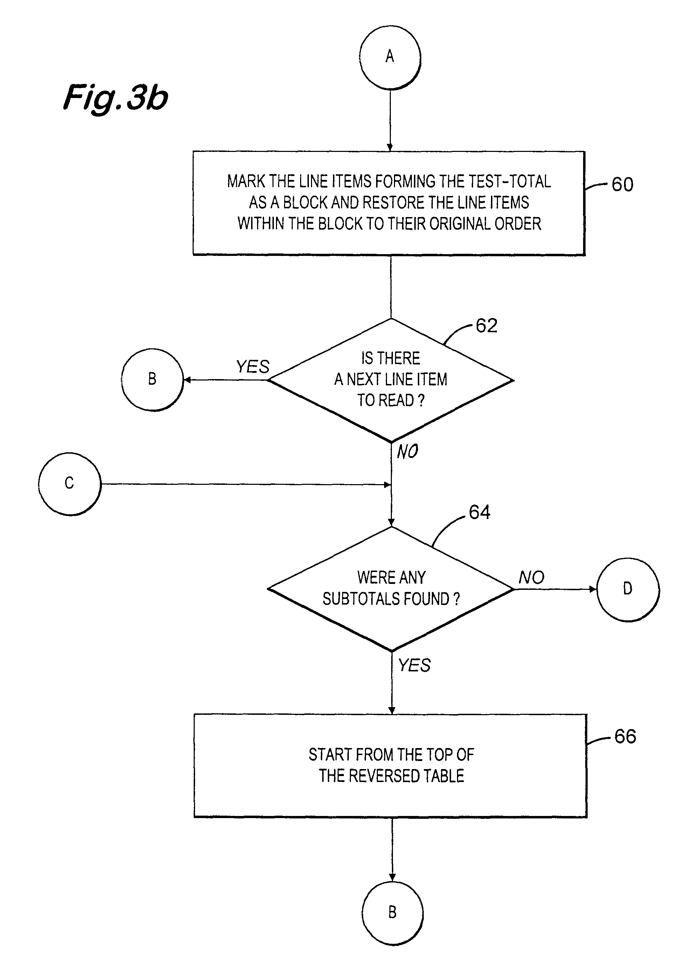

For each line item, a first test determines whether the number of the current line item plus the running total 42 equals the subtotal 44. If this is the case, the program flows to connector A to Fig. 3b. If this is not the case, a second test determines whether the number of the current line item subtracting the running total 48 equals the subtotal 50. If this is not the case, running_total is incremented by number 52 and the next line item is processed in the manner described. If this is case, like the first test, referring to Fig. 3b, connector A, the line items forming the subtotal is marked as a block, the line items within the block are returned to their original order, and the block is treated like a line item in subsequent passes 60. Note that the first line item of a block may be a subtotal and is tested in the subsequent passes. If there is another line item to be read 62, the program logic flows back via connector B to Fig. 3a, where the next line item is set as the subtotal, and an attempt is made to find other subtotal blocks.

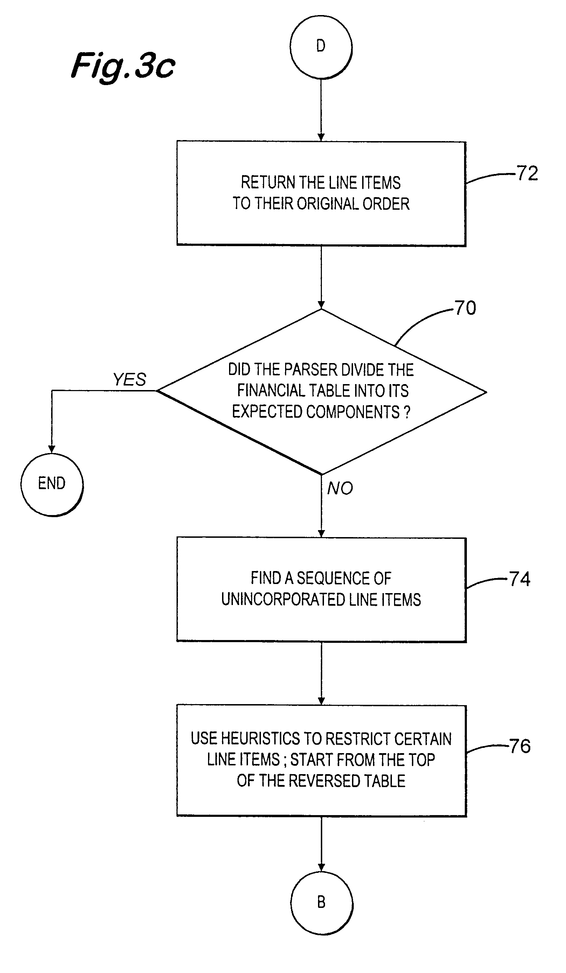

If all the line items are processed and there were one or more subtotals found 64, another pass is made from the top of the table 66 and the process flows to connector B of Fig. 3a. In this manner, larger blocks of subtotals may be found. If no subtotals were found 64, the process flows via connector D to Fig. 3c.

If the parser was able to determine the mathematical structure of the table and the table is thus dividable into its expected components, the line items are reversed to return to their original order 72 and the process ends. If the parser fails to find all the subtotals within the table and thus the components of the table are not recognizable, a second process is used. Since a subtotal may be comprised of a sequence of additions and subtractions, the present invention provides a method that compute "mixed" subtotals by non-deterministically negating a subset of the line items and recomputing the subtotals. First, a sequence of unincorporated line items (line items that are not part of a subtotal) is found. A subset of these line items may be determined as unrestricted line items and combination thereof may be negated. A restricted line item is determined by a heuristics process where the process looks to the label of the line item to find words which suggests that the line item can only be subtracted or added. For example, line items containing words such as "expense" or "cost" imply subtraction. For unrestricted line items, they can be either added or subtracted. In the preferred embodiment, a first combination of the unrestricted line items are negated and a pass is made over the list. If new subtotals are found, the list is re-parsed according to the algorithm described above. If no new subtotals are found, other combinations of the unrestricted line items are tried. If there are N unincorporated lines, it is only necessary to negate at most (N-1)/2 lines.

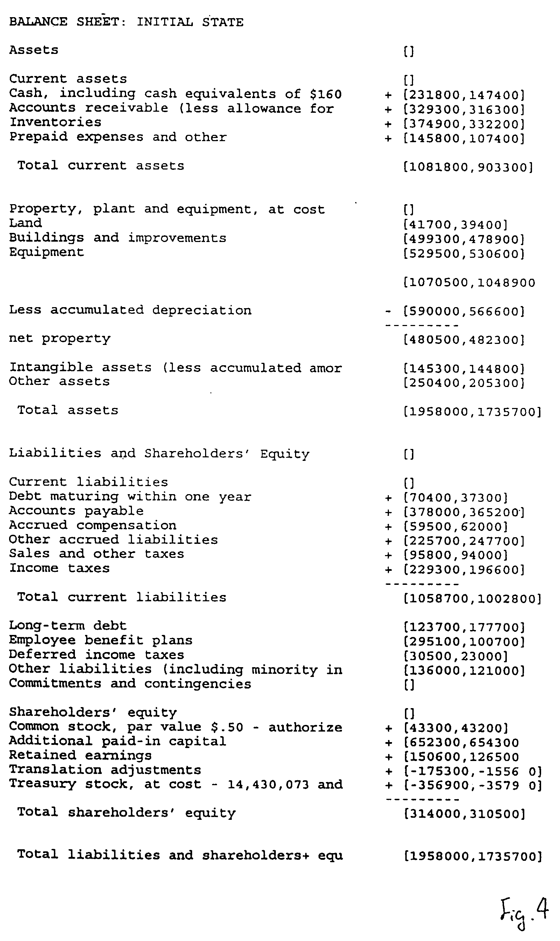

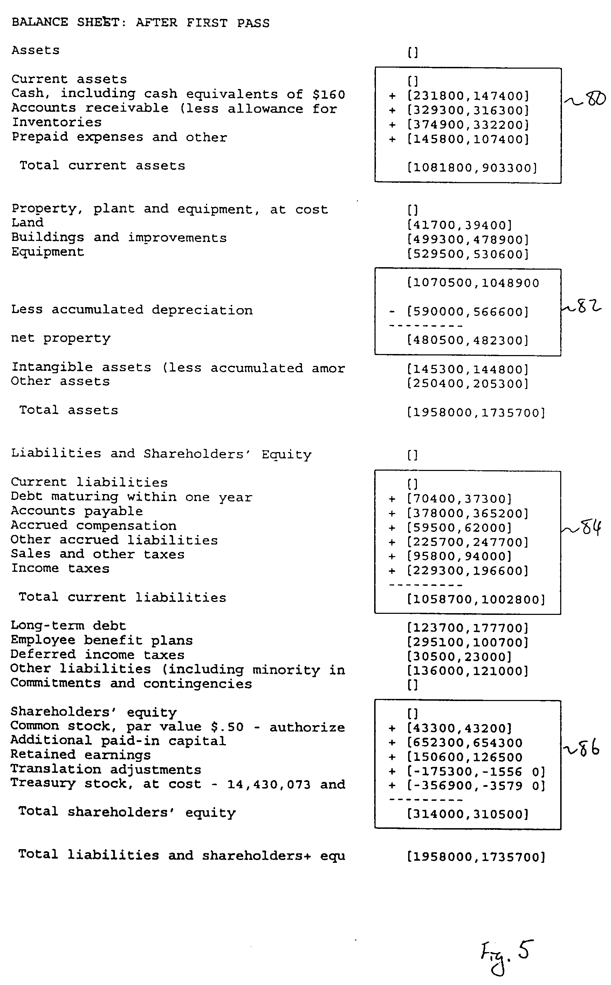

Fig. 4 shows the initial state of a balance sheet after all the line items and their corresponding numbers are identified but before it is processed by the parser. Note that a balance sheet includes an assets section as indicated by lines 3-28, a liabilities section as indicated by lines 31-41 and an equity section as indicated by lines 43-56, and a balance sheet conforms to the formula: assets = liabilities + equities, which is illustrated by lines 28 and 59. Fig. 5 shows the subtotals found, as illustrated by boxes 80, 82, 84, and 86, after the first pass is made by the bottom-up parser. For box 80, lines 5-9 sum up to line 11. The other boxes are summed in similar manner. Note that for box 84, line 33 is determined to be a section header for the subtotal because its position immediately above the line items is used as an indication that it is a section header for the line items. Appendix C illustrates the heuristics used to find the matching header lines. The first definition for subtotal_heading in Appendix C states that a line without numbers immediately preceding the subtotal is considered the label for the subtotal. The second definition allows a non-numbered line to be the header if the header and the footer labels correspond, corresponding conditions include the following: 1) if the header and footer are identical, 2) if the header is "X," and the footer is "Total X" (e.g. "Revenues" and "Total Revenues"), 3) if the header is "X" and the footer is "X TOTAL" (e.g. "Revenues" and "Revenues Total").

### Other heuristics may also be used.

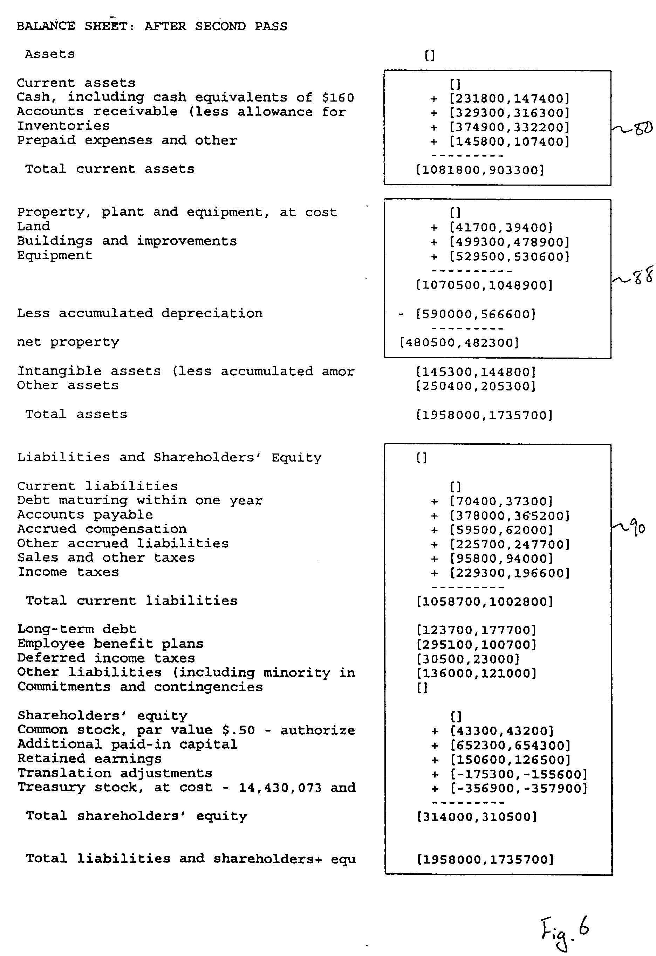

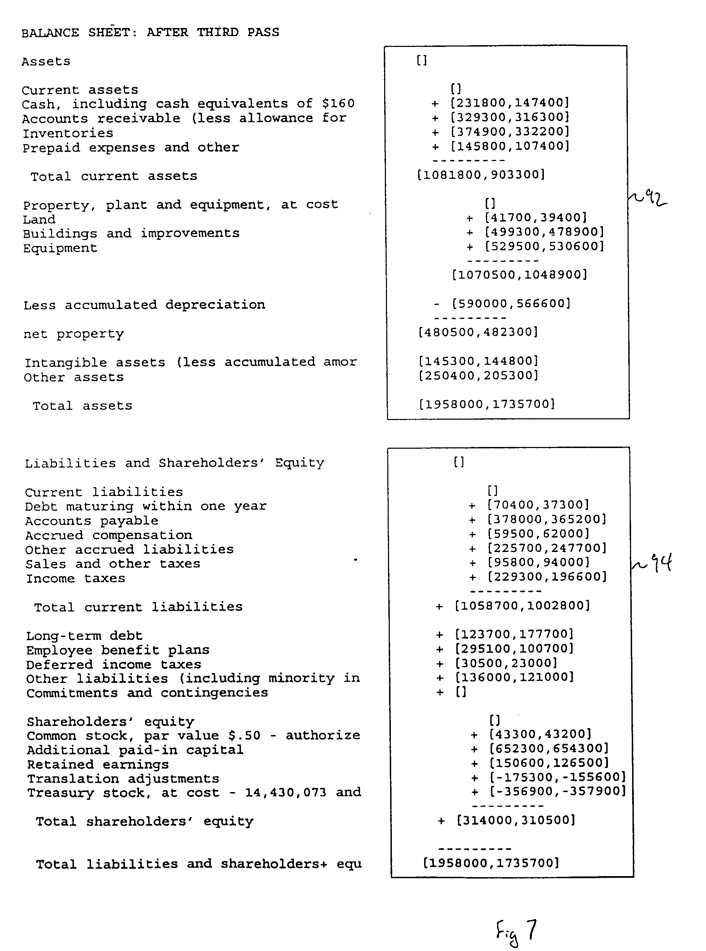

Note that subtotals are treated like a line item. Thus, in the next pass, box 86, lines 43-47, and box 84 are grouped as a subtotal, as illustrated by box 90 of Fig. 6. Referring to Fig. 6, line 31 is included in box 90 as a section header using heuristics described above. Referring back to Fig. 5, box 82, the present invention recognizes that the first line item of a subtotal, here line 19, may be a subtotal itself. In the subsequent pass, even though the line 19 is part of a subtotal, because it is the first line of a subtotal, it is treated like a line item and tested as a subtotal. Here, lines 15-17 are found to sum up to line 19 and are incorporated in box 88. In the third pass, referring to Fig. 7, all the line items are incorporated in subtotals as illustrated by boxes 92 and 94. A comparison of the subtotals shows that the two subtotals, lines 27 and 50, are equal in conformance with what is expected for a balance sheet.

At this point, the different levels of subtotals can be used to categorize the line items into their expected categories for a balance sheet and imported into a database or a spreadsheet accordingly. Referring to Appendix B, the code illustrates how the subtotals are used to categorize the table into its components. In lines 1-3, a balance sheet is recognized as being composed of an "assets" section and a "liabilities and equities" section. In lines 7-10, the first subtotal is recognized as the assets section. The number vector representing the assets is extracted and returned in the variable ATotal. In lines 11 through 21, the liabilities and equities section is recognized. On line 15, the next subtotal is recognized as the liabilities and equities section. The call to "same_number_vector" on line 17 validates that the Assets equals to the Liabilities&Equities subtotal.

Finally, a financial table with several columns may have mathematical errors in the columns. If there are three columns and one of the columns contains a mistake, the column containing the error can be identified and the other two columns can be used as reference columns. The type of error can be identified by using the reference columns and the error can be subsequently corrected. Common errors include errors in sign, order of magnitude, difference due to the sign of a line item, or by multiples of 10 (indicating dropping of a digit). Even if there are only two columns, heuristics can be provided to detect which column contains the mistake by analyzing the mathematical structure of the table, and the error can be flagged or corrected.

Appendixes A, B and C are listings of the software aspects of the preferred embodiment of the present invention.

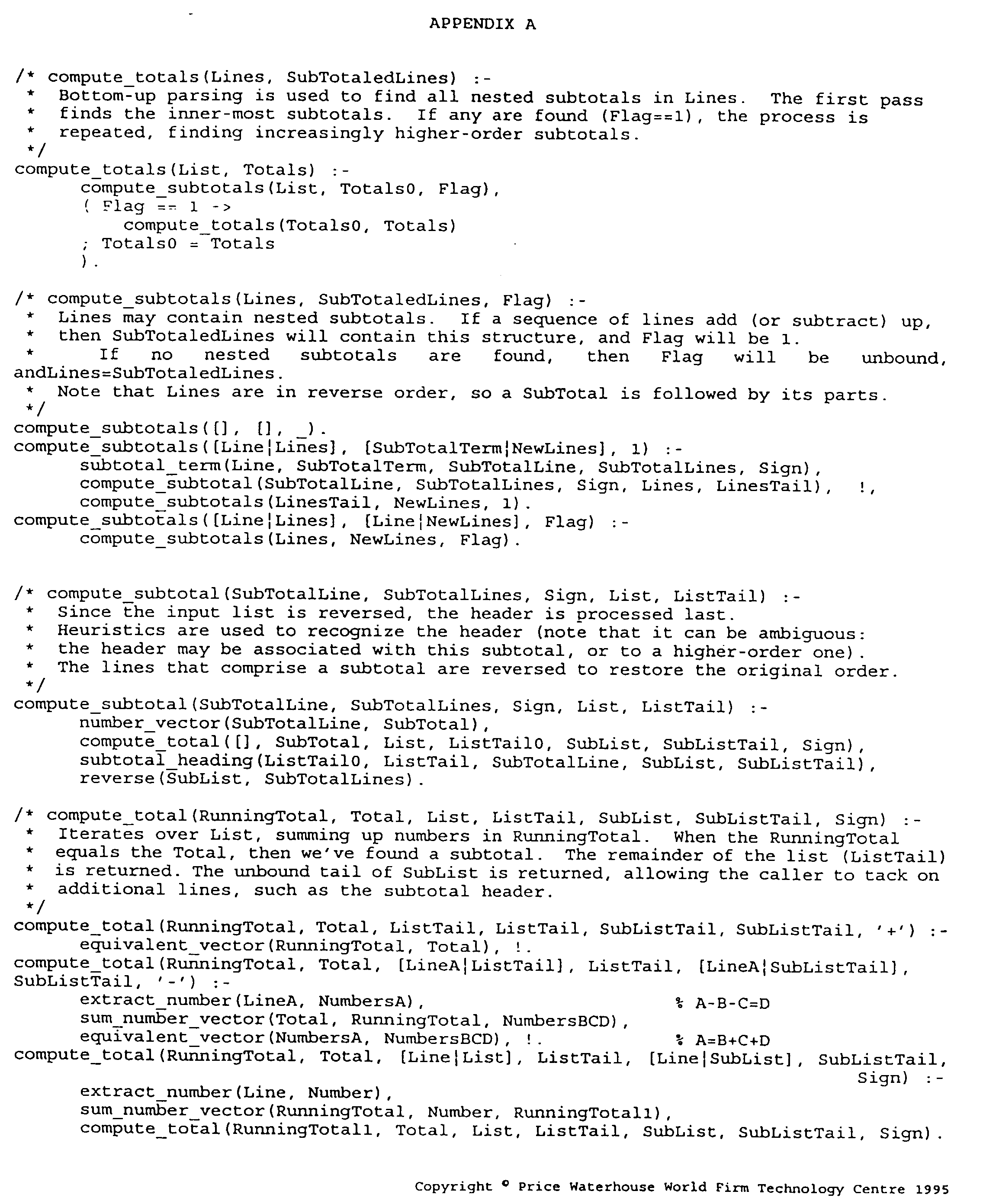

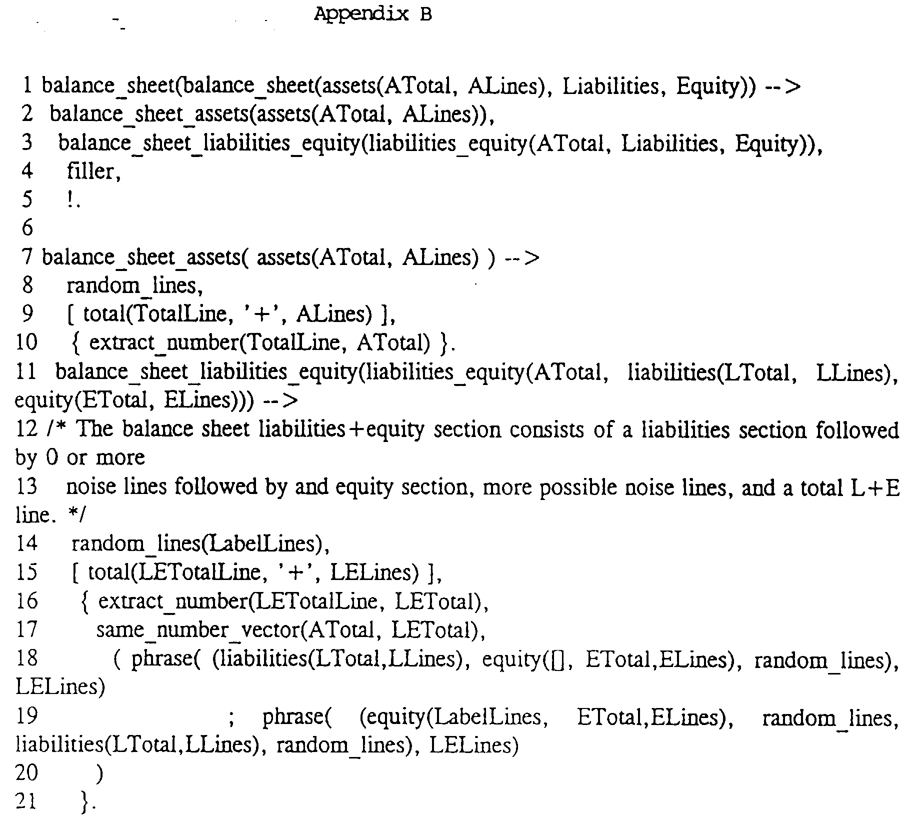

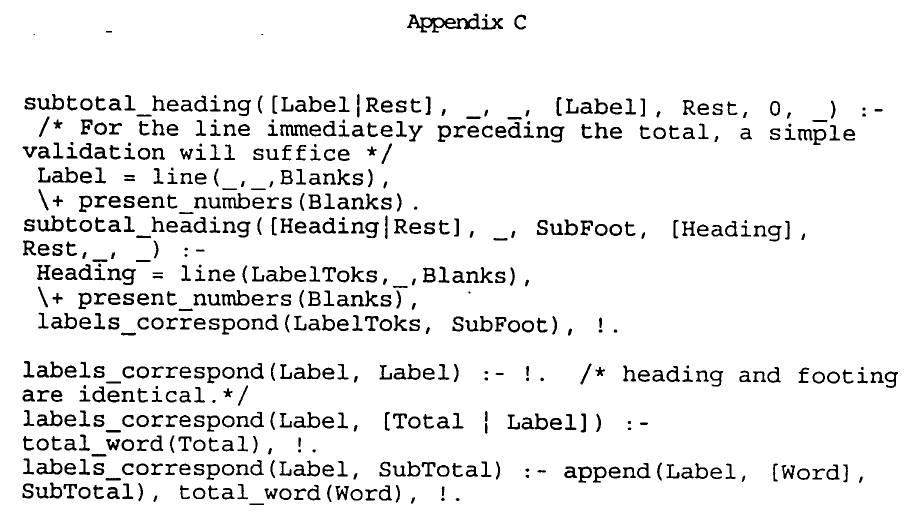

## Claims

1. A method for parsing a financial table being comprised of a sequence of line items each having a label and/or at least one corresponding number;
the method comprising the steps of:
1) reversing the sequence of said line items of said financial table;
2) selecting a line item and designating the number of the selected line item as a subtotal;
3) summing the numbers from each line item following the selected line item;
4) if the sum equals said subtotal, marking all summed line items as a block, said block being treated like a line items in subsequent passes;
5) repeating steps 2)-4) for each following line item until all the line items in the sequence have been tested as a subtotal;
6) if one or more sums equal the subtotals, starting from the beginning of said reversed sequence and repeating steps 2)-5); and
7) reversing the sequence of said line items of said financial table.

2. A method for parsing data presented in table format and being comprised of a sequence of line items each having a label and/or at least one corresponding number, comprising the steps of,
1) reversing the sequence of said line items of said financial table;
2) selecting a line item and designating the number of the selected line item as a subtotal;
3) summing the numbers from each line item following the selected line item;
4) if the sum equals said subtotal, marking all summed line items as a block, said block being treated like a line items in subsequent passes;
5) repeating steps 2)-4) for each following line item until all the line items in the sequence have been tested as a subtotal;
6) if one or more sums equal the subtotals, starting from the beginning of said reversed sequence and repeating steps 2)-5) and;
7) reversing the sequence of said line items of said financial table.

3. A method as recited in claim 1 or claim 2, wherein said summing step is performed by adding, one number at a time, the numbers of the line items following the selected line item, and comparing the sum to said subtotal.

4. A method as recited in claim 1 or claim 2, wherein said summing step is performed by adding, one number at a time, the numbers of the line items following the selected line item, subtracting the sum from the number of a next line item after the line items following the selected line item, and comparing the result to said subtotal.

5. A method as recited in any one of the preceding claims, and including after step 6) the following substeps:
if not all the subtotals are found,
i) designating unincorporated line items for said table as restricted or unrestricted,
ii) negating one or more of said unrestricted line items, and
iii) repeating steps 2)-6).

6. A method for verifying a financial table composed of a sequence of line items each having a label and an associated value, wherein the values of said line items forming a mathematical structure for said financial table, comprising the steps of:
i) reversing the sequence of said line items of said financial table;
ii) finding subsequences of consecutive line items having sums equal to the value of a line item immediately proceeding each of said respective subsequences of consecutive line items;
iii) marking said subsequences of consecutive line items as blocks;
iv) treating each said blocks as line items and repeating steps ii), iii), and iv) until all blocks have been found;
v) reversing the sequence of said line items of said financial table; and
vi) verifying said line items and said blocks of said financial table operate to form the mathematical structure of said financial table.

7. A method for verifying a financial table composed of a sequence of line items each having a label and an associated value, wherein the values of said line items forming a mathematical structure for said financial table, comprising the steps of:
i) finding subsequences of consecutive line items having sums equal to the value of a line item immediately proceeding or following each of said respective subsequences of consecutive line items;
ii) marking said subsequences of consecutive line items as blocks; and
iii) treating each said blocks as line items and repeating steps i), ii), and iii) until all blocks have been found;
iv) verifying said line items and said blocks of said financial table mathematically operate to form the mathematical structure of said financial table.

8. A method for verifying a table composed of a sequence of line items each having a label and an associated value, wherein the values of said line items forming a mathematical structure for said table, comprising the steps of:
i) finding subsequences of consecutive line items having sums equal to the value of a line item immediately following each of said respective subsequences of consecutive line items;
ii) marking said subsequences of consecutive line items as blocks; and
iii) treating each said blocks as line items and repeating steps i), ii), and iii) until all blocks have been found;
iv) verifying said line items and said blocks of said table mathematically operate to form the mathematical structure of said table.

9. A method as recited in any one of claims 6 to 8, wherein said verifying step uses addition operation.

10. A method as recited in any one of claims 6 to 8, wherein said verifying step uses subtraction operation.

11. A method as recited in any one of claims 6 to 8, wherein said verifying step includes the substeps of:
i) designating line items not in said blocks either as a restricted line item or an unrestricted line item; and
ii) subtracting one or more unrestricted line items in forming said mathematical structure.

12. A method of accessing a data base in the form of a financial table including a sequence of line items each having a label and/or at least one corresponding number;
the method comprising parsing said table by a parsing process which includes the steps of:
1) reversing the sequence of said line items of said financial table;
2) selecting a line item and designating the number of the selected line item as a subtotal;
3) summing the numbers from each line item following the selected line item;
4) if the sum equals said subtotal, marking all summed line items as a block, said block being treated like a line items in subsequent passes;
5) repeating steps 2)-4) for each following line item until all the line items in the sequence have been tested as a subtotal;
6) if one or more sums equal the subtotals, starting from the beginning of said reversed sequence and repeating steps 2)-5); and
7) reversing the sequence of said line items of said financial table.

13. An apparatus for accessing a data base in the form of a financial table including a sequence of line items each having a label and/or at least one corresponding number; the apparatus being adapted for parsing said table by a parsing process and comprising:
1) means for reversing the sequence of said line items of said financial table;
2) means for selecting a line item and designating the number of the selected line item as a subtotal;
3) means for summing the numbers from each line item following the selected line item;
4) means for determining whether the sum equals said subtotal, and if so marking all summed line items as a block, said block being treated like a line items in subsequent passes;
5) means for controlling the reactivation of the mens of 2)-4) for each following line item until all the line items in the sequence have been tested as a subtotal;
6) means for determining whether one or more sums equal the subtotals, and if so activating the reversing means and reactivating the means of 2)-4); and
7) means for reversing the sequence of said line items of said financial table.

14. A method of accessing a data base in the form of a financial table composed of a sequence of line items each having a label and an associated value, wherein the values of said line items form a mathematical structure for said financial table; the method comprising verifying said table by a verifying process which comprises the steps of:
i) finding subsequences of consecutive line items having sums equal to the value of a line item immediately proceeding or following each of said respective subsequences of consecutive line items;
ii) marking said subsequences of consecutive line items as blocks; and
iii) treating each said blocks as line items and repeating steps i), ii), and iii) until all blocks have been found;
iv) verifying said line items and said blocks of said financial table mathematically operate to form the mathematical structure of said financial table.

15. An apparatus for accessing a data base in the form of a financial table composed of a sequence of line items each having a label and an associated value, wherein the values of said line items form a mathematical structure for said financial table; the apparatus being adapted for verifying said table by a verifying process;
the apparatus comprising:
i) means for finding subsequences of consecutive line items having sums equal to the value of a line item immediately proceeding or following each of said respective subsequences of consecutive line items;
ii) means for marking said subsequences of consecutive line items as blocks; and
iii) means for treating each said blocks as line items and reactivating means i), ii), and iii) until all blocks have been found; and
iv) verifying said line items and said blocks of said financial table mathematically operate to form the mathematical structure of said financial table.
